# FASCICULE DE BREVET EUROPEEN

(11) **EP 3 011 189 B1**
(45) Date de publication et mention de la délivrance du brevet: **14.06.2017**
(21) Numéro de dépôt: 14733129.2
(22) Date de dépôt: 19.06.2014
(51) Int. Cl.: F15B 15/06, B25B 5/06, H01M 10/04

(54) **VÉRIN ROTO-LINÉAIRE DE BRIDAGE**
DREH-LINEAR KLEMMZYLINDER
ROTO-LINEAR CLAMPING ACTUATOR

(30) Priorité: 21.06.2013 FR 1355898
(43) Date de publication de la demande: 27.04.2016
(73) Titulaire: Blue Solutions, 29500 Ergué Gabéric (FR)
(72) Inventeur: LE GAL, Guy, F-29000 Quimper (FR)
(74) Mandataire: Regimbeau
(86) Numéro de dépôt international: PCT/EP2014/062956
(87) Numéro de publication internationale: WO 2014/202728

(56) Documents cités:
- JP-A- H0 626 503
- JP-A- 2010 203 470
- JP-U- S5 280 396
- US-A- 5 820 118
- US-A1- 2009 038 471

## Description

L'invention concerne un vérin roto-linéaire de bridage permettant de pincer un élément sur un support.

Un vérin de bridage comprend généralement un ensemble mobile conformé en L avec une tige verticale et un bras horizontal situé à l'extrémité supérieure de la tige et d'un seul tenant avec celle-ci. La tige est placée à l'intérieur d'un corps et mobile relativement audit corps en translation et en rotation, de sorte que l'ensemble mobile peut prendre au moins deux positions relativement à un support horizontal, à savoir une position de bridage dans laquelle le bras est placé au-dessus d'un support adjacent au vérin à une première hauteur de façon à pincer un élément sur le support et une position de dégagement, dans laquelle l'extrémité du bras est placée à distance du support, à une deuxième hauteur supérieure à la première hauteur.

Un tel vérin peut être utilisé dans de nombreuses applications et par exemple dans un procédé de fabrication d'une cellule de batterie comportant une pluralité d'électrodes positives - ou cathodes - et d'électrodes négatives -ou anodes - empilées, avec interposition éventuelle d'un électrolyte solide (à base de polymère notamment). Le vérin permet dans ce cas de pincer l'empilement des différentes couches (anode, cathode et éventuellement électrolyte) pour le maintenir sur le support lors du transport de l'empilement déjà formé.

Dans l'état de la technique, pour réaliser le mouvement roto-linéaire du vérin, on conforme celui-ci de la façon suivante. La tige du vérin comporte des rainures de guidage de forme hélicoïdale sur au moins une partie de leur trajet. Le corps comporte des billes fixes sur sa surface interne et destinées à être en contact avec la tige, les billes étant placées dans les différentes rainures de guidage. Ainsi, une bille coopère avec chaque rainure pour que le déplacement de l'ensemble mobile soit effectué selon la trajectoire imposée par le glissement de la bille dans la rainure de guidage, lorsqu'une action est appliquée sur l'ensemble mobile selon l'axe de déplacement. Le contact entre la bille et la rainure est quasi-ponctuel.

Toutefois, les billes étant fixes relativement au corps, elles ne roulent pas dans les rainures mais frottent sur celles-ci lorsque l'ensemble mobile est soumis à une action mécanique selon l'axe de déplacement. L'usure de la tige due à ces mouvements de frottements a tendance à créer un jeu entre la bille et la rainure, ce qui est susceptible de perturber le déplacement de la tige et de décaler au fur et à mesure la position de la bille dans la rainure et donc la position angulaire du bras relativement au support lorsque l'ensemble mobile est en position de bridage. Ainsi, le maintien de l'empilement sur le support, garanti par la position angulaire du bras, n'est plus assuré au bout d'un certain nombre de déplacements de la tige, à cause de l'usure et de l'endommagement des rainures de la tige générée par les billes. De plus, même avant d'atteindre ce stade, la position angulaire du bras devient aléatoire, du fait de la multiplicité de lieux de contact possibles entre les billes et les rainures, ce qui ne permet plus de détecter la position de bridage ou de dégagement et bloque alors le fonctionnement automatique de certaines machines avec lesquelles ce vérin coopère.

Le document JP 2010 203470 décrit un vérin de bridage conforme au préambule de la revendication 1.

L'invention a pour but de remédier aux inconvénients de l'état de la technique en proposant un vérin dont la durée de vie est fortement augmentée.

A cet effet, l'invention a pour objet un vérin de bridage comprenant un corps et un ensemble mobile contenu dans une chambre de réception du corps, et mobile en rotation et en translation relativement au corps selon un axe de déplacement prédéterminé, le vérin comportant des moyens de guidage afin de guider l'ensemble mobile entre une position de bridage dans laquelle il présente une première hauteur et une première position angulaire selon l'axe de déplacement et une position de dégagement dans laquelle il présente une deuxième hauteur et une deuxième position angulaire selon ledit axe, lesdits moyens de guidage comprenant :
- au moins un rouleau cylindrique disposé dans le corps du vérin de sorte que l'axe du rouleau soit essentiellement perpendiculaire à l'axe de déplacement,
- une tige de l'ensemble mobile s'étendant essentiellement selon l'axe de déplacement et étant conformée de façon à comprendre au moins une portion de déplacement présentant une section prédéterminée selon un plan normal à l'axe de déplacement, la section comportant au moins un bord rectiligne, la portion de déplacement étant conformée de sorte que ladite section suive une directrice essentiellement hélicoïdale autour de l'axe de déplacement sur au moins une fraction de la portion, la tige et le ou les rouleaux étant positionnés de sorte que le ou chacun des rouleaux est en regard du ou d'au moins un des bords rectilignes.

Conformément à l'invention, la portion de déplacement de la tige présente une section polygonale, et un rouleau est agencé en regard de chacun des côtés de la section polygonale.

Par « rouleau », on entend un élément de roulement de forme essentiellement cylindrique, un tel roulement pouvant également être nommé « aiguille » par l'homme de l'art.

Ainsi, le déplacement de la tige du vérin est effectué par coopération du ou des rouleaux ménagés sur le corps et d'une face de la portion de la tige, en suivant un contact non plus ponctuel mais linéaire. De cette façon, le contact entre tige et corps est effectué sur une surface plus grande et engendre moins de pression locale et moins d'usure sur la tige, ce qui diminue l'impact des problèmes précités voire élimine lesdits problèmes car on peut faire en sorte de ne pas atteindre une pression critique marquant le commencement de l'usure du matériau en lequel est réalisée la tige.

Ainsi, grâce à l'invention, on augmente considérablement la durée de vie d'un vérin de bridage.

Préférentiellement, l'invention présente également les caractéristiques listées ci-dessous, prises seules ou en combinaison :
- la portion de déplacement de la tige présente une section carrée et les moyens de guidage comprennent quatre rouleaux dont chacun est agencé en regard de l'un des côtés de la section carrée,
- Le polygone peut également être un triangle, un hexagone, etc. Pour des raisons d'optimisation du guidage et des coûts, la section est notamment constituée par un carré. De cette façon, on réduit également les efforts au niveau de chaque contact en multipliant lesdits contacts, limitant ainsi encore l'usure. De plus, le couple de résistance à la torsion est ainsi très important. Cela permet donc d'obtenir un vérin qui a une durée de vie au moins cent fois supérieure à celle d'un vérin tel que décrit dans l'état de la technique,
- la section de la portion de déplacement est de préférence symétrique relativement à l'axe de déplacement, ce qui permet d'équilibrer les forces de réaction de doubler la distance entre les zones de contact de la tige avec les rouleaux créant l'effet couple, permettant ainsi pour un même couple, de diminuer les efforts et donc la pression appliquée sur la tige,
- les rouleaux reposent sur un épaulement du corps, normal à l'axe de déplacement, entourant de préférence l'embouchure de la chambre de réception,
- le ou les rouleaux sont éventuellement montés de façon à être libres en rotation autour de leur axe relativement au corps, ce qui leur permet de rouler sur la surface de la tige et non de frotter. On diminue ainsi encore les efforts appliqués sur la surface de contact de la tige et l'usure de ladite tige,
- le corps comprend notamment un épaulement, normal à l'axe de déplacement du vérin, entourant de préférence l'embouchure de la chambre de réception, sur lequel repose(nt) le ou les rouleaux,
- la translation des rouleaux est empêchée au moins dans le plan normal à l'axe de déplacement, de préférence également selon l'axe de déplacement, du fait du contact du rouleau avec la tige, le corps et/ou les rouleaux adjacents. De préférence, les rouleaux sont montés dans une pièce appelée cage à rouleau, rapportée sur une pièce du corps dans laquelle est ménagée la chambre de réception, Cela permet d'utiliser une pièce standard comportant la chambre de réception standard pour concevoir le vérin, et de diminuer ainsi les coûts de fabrication.
- l'épaulement forme un rebord délimité par une ou plusieurs parois s'étendant selon l'axe de déplacement et ayant une section selon un plan normal à l'axe de déplacement suivant celle de la portion de déplacement, les rouleaux étant en contact avec la tige dans la portion de déplacement et la paroi correspondante (de préférence parallèle au bord de la portion de déplacement), afin de bloquer la translation du rouleau selon la direction radiale de la tige,
- les rouleaux sont en contact à chacune de leur extrémité longitudinale avec la ou l'une des parois du corps délimitant l'épaulement ou avec un rouleau adjacent, de préférence avec la ou l'une des parois du corps à l'une de ses extrémités longitudinales et avec un rouleau adjacent à l'autre de ses extrémités longitudinales, afin de bloquer la translation du rouleau selon sa direction longitudinale,
- l'épaulement peut ainsi s'étendre sur toute la circonférence de la chambre de réception et accueillir tous les rouleaux, notamment lorsque la section de la tige dans la portion de déplacement est carrée. Chaque rouleau peut ainsi être agencé de sorte que sa paroi d'extrémité (ou base) au niveau d'une première extrémité longitudinale soit en contact avec une paroi latérale d'un rouleau adjacent alors que sa paroi latérale est en contact au niveau de son extrémité longitudinale opposée avec la paroi d'extrémité longitudinale d'un rouleau adjacent. Les rouleaux se bloquent ainsi les uns les autres en translation selon leur direction longitudinale sans devoir munir le corps de formes complexes pour ce faire,
- le corps comporte une cage à rouleaux rapportée à l'embouchure de la chambre de réception et comprenant les rouleaux et l'épaulement et éventuellement les parois verticales,
- la cage à rouleaux est réalisée en acier, de préférence traité pour que sa dureté soit supérieure à 50HRc, et une pièce du corps comprenant la chambre de réception est réalisée en un autre matériau, tel que l'aluminium,
- la tige et le ou les rouleaux et la tige sont réalisés en matériau métallique, notamment en acier, de préférence traité pour que sa dureté soit supérieure à 50 HRc, de préférence, au moins une partie du corps, notamment la cage à rouleaux est également réalisée en acier,
- Un traitement de surface ou un traitement à coeur peut être appliqué sur la tige ou le ou au moins l'un des rouleaux pour augmenter la dureté dudit rouleau ou de la tige et ainsi limiter encore l'usure de ces éléments. Une dureté supérieure ou égale à 50 HRc, pouvant être obtenue à l'aide d'un traitement courant dans le commerce, est suffisante pour résister à l'usure. Le corps et notamment la cage à rouleaux est de préférence également traitée pour améliorer sa dureté.
- La partie du corps dans laquelle est ménagée la chambre de réception est réalisée en un autre matériau, notamment l'aluminium, standard, cette partie n'intervenant pas dans le système de guidage. On diminue ainsi le prix et le poids du vérin de bridage selon l'invention,
- en particulier, la cage à rouleaux est réalisée en acier, de préférence traité pour que sa dureté soit supérieure à 50HRc, et une pièce du corps comprenant la chambre de réception est réalisée en un autre matériau, tel que l'aluminium,
- la directrice de la portion de déplacement de la tige est hélicoïdale autour de l'axe de déplacement sur une fraction inférieure de la portion de déplacement et linéaire parallèle à l'axe de déplacement sur une fraction supérieure de la portion de déplacement,

Le vérin de bridage peut également comprendre les caractéristiques suivantes :
- l'ensemble mobile comprend un bras s'étendant à l'extrémité supérieure de la tige selon une direction essentiellement perpendiculaire à l'axe de déplacement,. Il est notamment d'un seul tenant avec celle-ci,
- le corps du vérin est solidaire d'un support comprenant une face d'accueil essentiellement perpendiculaire à l'axe de déplacement, et le vérin est configuré de sorte que, dans la position de bridage, le bras (situé à l'extrémité de la tige) se trouve à la verticale de la face d'accueil à une première hauteur (ce qui lui permet d'être en butée contre la face d'accueil ou contre un élément posé sur celle-ci), et que, dans la position de dégagement, le bras se trouve à une hauteur supérieure (c'est-à-dire sur supérieure à la hauteur du bras dans la position de bridage), une extrémité libre du bras se trouvant à distance de la face d'accueil du support selon un plan normal à l'axe de déplacement,
- le vérin comprend une entrée de fluide dans la chambre de réception, de sorte qu'un fluide entrant dans la chambre (112) par l'entrée de fluide (114) vienne en contact avec une face de butée (116) de l'ensemble mobile, afin de le pousser vers sa position de dégagement,
- cette entrée de fluide est apte à actionner le déplacement de l'ensemble mobile jusqu'à la position de dégagement. L'entrée permet d'envoyer un flux, notamment un flux d'air contre une face de butée de l'ensemble mobile, notamment normale à l'axe de déplacement, le flux se déplaçant de préférence essentiellement selon l'axe de déplacement. La face de butée est notamment la face inférieure d'un piston situé à l'extrémité inférieure de la tige,
- le vérin comprend des moyens, notamment élastique, de rappel de l'ensemble mobile dans la position de bridage,
- les moyens de rappel sont constitués par un ressort situé dans la chambre de réception et associé d'une part à l'ensemble mobile et d'autre part au corps.
- alternativement, le déplacement de l'ensemble mobile du vérin peut être actionné à l'aide d'un moteur ou de tout autre moyen,
- la directrice de la portion de déplacement de la tige, destinée à être en contact avec le rouleau, est de préférence hélicoïdale autour de l'axe de déplacement sur une fraction inférieure de la portion de déplacement et linéaire parallèle à l'axe de déplacement sur une fraction supérieure de ladite portion. Ainsi, depuis la position de dégagement correspondant au contact des rouleaux sur l'extrémité inférieure de la portion de déplacement, l'ensemble mobile effectue un premier mouvement de translation et rotation (translation hélicoïdale) puis, lorsque le bras se trouve dans une position angulaire identique à celle de la position de bridage, l'ensemble mobile n'effectue plus qu'une translation simple. Ainsi, on peut pincer les différents éléments sur la face d'accueil avec le bras dans une position angulaire déterminée, quelle que soit la hauteur des éléments empilés sur la face d'accueil. On garantit un bon maintien des éléments sur la face d'accueil et ce malgré une variation de la hauteur des éléments placés sur la surface d'accueil. La configuration du vérin est donc très adaptable et celui-ci peut être utilisé dans différents contextes.

L'invention a également pour objet un procédé de bridage d'un empilement de couches, notamment de couches destinées à former un ensemble de stockage d'énergie, effectué à l'aide d'un vérin selon l'invention dans lequel on effectue les étapes suivantes :
- on empile les couches sur une face d'accueil essentiellement normale à l'axe de déplacement du vérin d'un support solidaire du vérin, alors que l'ensemble mobile est placé en position de dégagement, l'extrémité d'un bras situé à une extrémité supérieure de la tige étant à distance de la face d'accueil,
- on déplace l'ensemble mobile de sorte que celui-ci prenne une position de bridage dans laquelle le bras est placé à la verticale de la face d'accueil, en contact avec l'extrémité supérieure de l'empilement des couches.

Préférentiellement, on déplace ensuite le support jusqu'à un poste prédéterminé et on déplace la tige du vérin en position de dégagement lorsque le support atteint le poste prédéterminé.

On va maintenant décrire l'invention à partir des dessins détaillés ci-après qui représentent différents modes de réalisation de l'invention et ne sont nullement limitatifs de l'invention, dans lesquels :
- la figure 1 est un schéma général de principe d'un vérin de bridage selon l'invention,
- la figure 2 est une vue en perspective du vérin représentant en particulier le système de guidage du vérin, lorsque le vérin est en position de bridage,
- la figure 3 est la même vue que celle de la figure 2 lorsque le vérin est en position de dégagement,
- la figure 4A est une vue en perspective de la tige et du piston de l'ensemble mobile du vérin des figures 2 et 3,
- la figure 4B est une coupe selon A-A de la tige et du piston de l'ensemble mobile de la figure 4A.

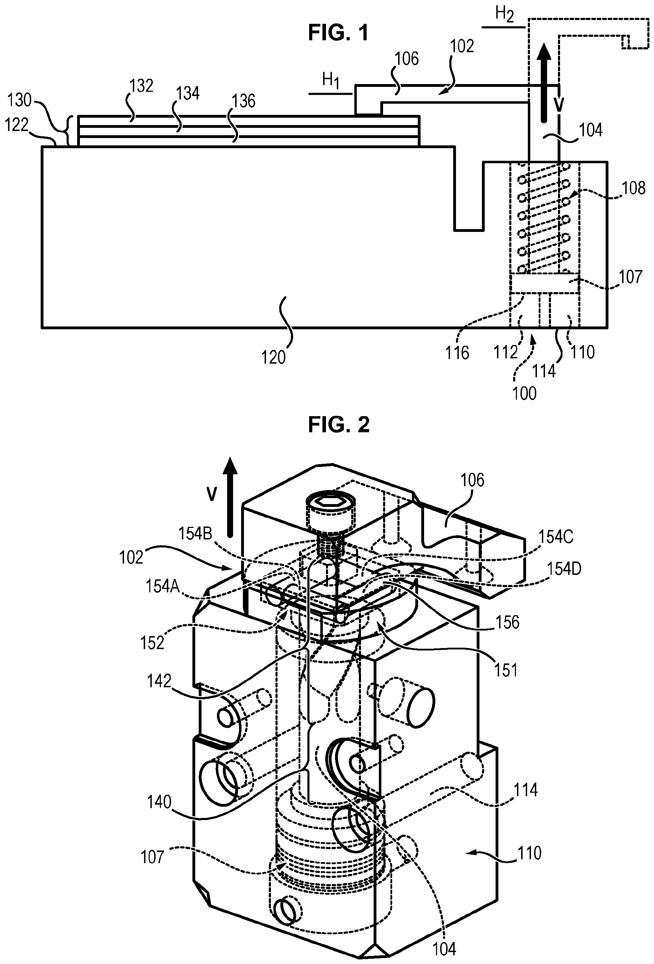

On a représenté sur la figure 1 un vérin de bridage 100 selon l'invention. Comme on l'a déjà expliqué, un tel vérin de bridage peut être utilisé dans de nombreuses applications et dans différents contextes même si une application qui est particulièrement pertinente pour le déposant est une application dans le domaine du stockage d'énergie et notamment l'empilement de différents films permettant de constituer un élément de stockage d'énergie (notamment anode, électrolyte et cathode, les anodes et cathodes étant munies de collecteur de courant). Les différents films sont en effet empilés sur un support et sont, une fois empilés, déplacés jusqu'à un autre poste de la chaîne d'assemblage, par exemple pour inclure l'empilement dans une enveloppe mécanique. Pour cette opération, on utilise au moins un vérin de bridage selon l'invention qui permet de pincer les différents films empilés lors du transport de sorte que l'empilement soit maintenu sans déplacement relatif des couches entre elles et relativement au support jusqu'au poste de fabrication suivant.

Le vérin de bridage 100 comprend donc à cet effet un ensemble mobile 102 comprenant une tige 104 s'étendant selon un axe de déplacement vertical V ainsi qu'un bras 106, situé à l'extrémité supérieure de la tige 104 et essentiellement horizontal. L'ensemble mobile peut également comprendre un piston 107, de profil cylindrique et de dimensions supérieures à celles de la tige et situé à l'extrémité inférieure de la tige 104. Les directions décrites dans l'exemple ne sont bien sûr pas limitatives de l'invention, l'axe de déplacement pouvant par exemple être horizontal. L'ensemble mobile est inséré dans une chambre de réception 112 d'un corps de vérin 110 et est mobile relativement à ce corps 110 en translation et en rotation selon l'axe V.

Le corps 110 du vérin 100 est également solidaire d'un support 120 comportant une face d'accueil 122 s'étendant dans un plan essentiellement horizontal et donc normal à l'axe de déplacement V du vérin. Ce support 120 est destiné à recevoir un empilement 130 de couches de batteries par exemple, notamment une couche de cathode 132, une couche d'électrolyte 134 et une couche d'anode 136, formant une batterie élémentaire. Evidemment, le nombre de couches de l'empilement n'est pas limité au nombre indiqué ci-dessus, la nature du ou des objets à brider n'étant pas non plus limitée à ce qui est décrit.

Le vérin de bridage 100, qui permet de maintenir l'empilement en position sur la face d'accueil 122 du support 120 est ainsi configuré de sorte que l'ensemble mobile 102 puisse être mobile entre une position de bridage, représentée en traits pleins sur la figure 1, et une position de dégagement, représentée en traits pointillés sur cette figure. Dans la position de bridage, le bras 106 se situe à la verticale du support 120, à une première hauteur H1, de sorte qu'il soit en butée contre l'empilement 130 afin de pincer ce dernier contre le support et de maintenir sa position sur le support. Dans la position de dégagement, le bras 106 se trouve dans une position angulaire dans laquelle l'extrémité du bras 106 est distante du support selon un plan normal à l'axe de déplacement V, à savoir qu'elle n'est pas située à la verticale de celui-ci, et se situe à une hauteur H2 supérieure à la hauteur de l'empilement 130. Lorsque le vérin est dans cette position, l'espace au-dessus du support est libre et permet d'empiler les différentes couches sans gêne aucune du fait de la présence du bras.

Pour maintenir la position de bridage, le vérin comprend des moyens élastiques, notamment un ressort 108 en compression positionné dans la chambre de réception 112 du corps 110 dont une extrémité (l'extrémité supérieure) est en appui sur le corps (ou associée à celui-ci), sur une surface délimitant la chambre de réception 112 à l'extrémité supérieure de celle-ci et l'autre extrémité (extrémité inférieure) est en appui sur l'ensemble mobile (ou associée à celui-ci), notamment sur la face supérieure du piston 107. Pour déplacer l'ensemble mobile de la position de bridage à la position de dégagement, le vérin comporte une entrée d'air 114 en partie inférieure du corps et en communication de fluide avec la chambre de réception 112 du corps, permettant d'envoyer un flux d'air comprimé dans la chambre, qui pousse sur une surface de butée 116 du piston 107 normale à l'axe de déplacement. La poussée de l'air sur la surface de butée 116 permet de combattre l'action du ressort 108 et de déplacer l'ensemble mobile de la position de bridage à la position de dégagement. Cette entrée d'air 114 communique généralement avec une sortie d'air d'une station correspondant à un poste de la chaîne de fabrication, l'air étant ainsi envoyé dans l'entrée d'air 114 à l'arrimage du support sur ladite station.

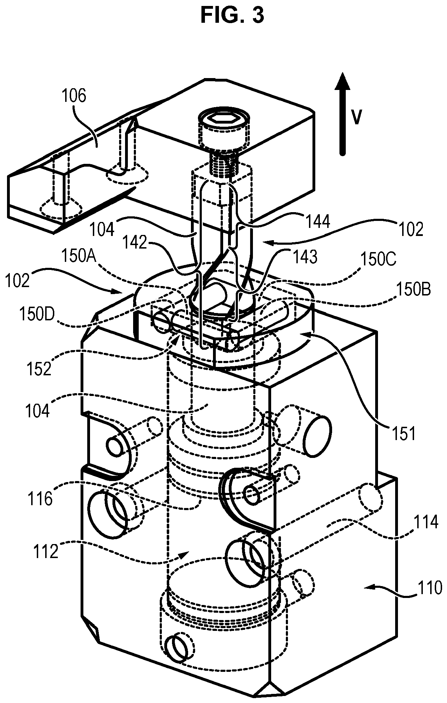

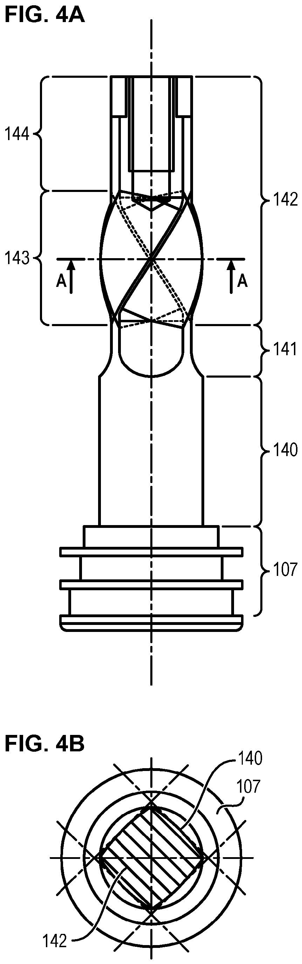

On va maintenant décrire à l'aide des figures 2 à 4 le vérin et plus particulièrement le système de guidage du vérin selon un mode de réalisation de l'invention. Comme on le voit sur les figures 2 et 3, la tige 104 comprend une première portion 140 ayant une section circulaire dans un plan normal à l'axe de déplacement, de dimensions inférieures à celles du piston, et une deuxième portion 142, ou portion de déplacement, de section carrée dans ce plan. Dans la portion de déplacement, la tige comprend une première fraction 143, ou fraction inférieure, plus proche de la première portion 140, dans laquelle la droite directrice selon laquelle est développée la section est hélicoïdale autour de l'axe de déplacement du corps. Elle comprend également une deuxième fraction 144, ou fraction supérieure, pour laquelle la directrice selon laquelle est développée la section est parallèle à l'axe de déplacement V du vérin.

La section carrée est taillée dans la tige circulaire de sorte que la dimension du côté du carré de la portion 142 est inférieure au diamètre de la tige dans la portion 140. On voit que la tige comporte une portion 141 de transition entre les portions 140 et 142 permettant un passage progressif de la section circulaire à la section carrée.

La chambre 112 est de section circulaire complémentaire de la section du piston 107. L'embouchure de la chambre est donc également de section circulaire et de dimension supérieures à celles de la tige dans les portions 140 et 142.

Le vérin comprend également quatre rouleaux de guidage 150A-150D cylindriques, chaque rouleau étant destiné à être en contact au niveau de sa paroi latérale avec l'un des côtés de la tige dans sa portion 142 de section carrée selon une ligne de contact s'étendant selon une direction horizontale. Chaque rouleau est plus particulièrement positionné dans une cage à rouleaux 151 rapportée sur une pièce dans laquelle est ménagée la chambre 112, notamment sur un épaulement 152 de la cage formant un rebord entourant l'embouchure de la chambre de réception 112 et situé au voisinage de l'extrémité supérieure du corps du vérin.

Le corps 110 et notamment la cage à rouleaux 151 est conformée de sorte que des faces verticales 154A-154D entourent l'épaulement et délimitent au voisinage de l'embouchure de la chambre de réception 112 un logement intérieur situé au-dessus de la chambre de réception, de dimension supérieure à la chambre de réception et de section suivant celle de la tige dans sa portion de déplacement dans le plan normal à l'axe de déplacement, à savoir carrée. La tige est placée dans la chambre de réception 112 de sorte que, dans sa portion de déplacement 142, les côtés de la tige soient parallèles aux faces 154A-154D.

Chaque rouleau 150 est bloqué en translation entre une face 154 essentiellement verticale de la cage à rouleaux 151 et un côté correspondant de la tige 104 et par les rouleaux adjacents, selon le plan normal à l'axe de déplacement.

Le corps du vérin et notamment la cage à rouleaux est en effet configurée de sorte que l'espace entre chacune des parois 154 et le côté correspondant de la tige 104 dans la portion de déplacement soit juste suffisant pour accueillir un rouleau. Le rouleau 150 est ainsi en contact au niveau de sa paroi latérale avec la tige 104 dans sa portion de déplacement 142 et le corps sur la face 154, bloquant sa translation selon la direction radiale de la tige. On notera que la tige est donc bloquée sans jeu entre les quatre rouleaux et ne se désaxe pas, même si l'embouchure de la chambre de réception 112 n'est pas de forme complémentaire de celle de la tige 104 dans sa portion de déplacement.

Dans sa direction longitudinale, le rouleau 150A-150D est en contact à l'une de ses extrémités longitudinales, dite première extrémité, avec une paroi 154B-154A de la cage 151 perpendiculaire à celle avec laquelle sa paroi latérale est en contact et, à l'autre de ses extrémités longitudinales, dite deuxième extrémité, avec la paroi latérale d'un des rouleaux adjacents 150D-150C. Le rouleau 150 est ainsi bloqué en translation selon sa direction longitudinale. On notera que la paroi latérale du rouleau 150A-150D est en contact sur sa paroi latérale au voisinage de sa première extrémité longitudinale avec l'extrémité longitudinale de l'autre rouleau adjacent 150B-150A, bloquant ainsi également la translation dudit autre rouleau adjacent 150B-150A selon la direction longitudinale de ce rouleau.

Le corps 110, notamment la cage à rouleaux, comprend également un retour 156 parallèle à l'épaulement 152 et donc essentiellement horizontal et positionné à l'extrémité supérieure des faces 154A-154D de sorte que l'espace entre les parois 152 et 156 soit juste suffisant pour accueillir les rouleaux 150, ceux-ci étant en contact au niveau de leur paroi latérale avec les parois 152 et 156 de la cage à rouleaux, bloquant ainsi leur translation selon l'axe de déplacement. Ainsi, même s'ils ne sont pas fixés au corps, du fait de leur positionnement, les rouleaux ne sont pas mobiles relativement au corps, notamment à la cage à rouleaux.

Les rouleaux et la tige sont réalisés en métal, notamment en acier, et traités pour améliorer leurs propriétés mécaniques, notamment leur dureté, afin de limiter l'usure de ces éléments. La dureté des rouleaux et de la tige est plus particulièrement supérieure à 50HRc. La cage à rouleaux 151 est également réalisée en acier traité alors que la pièce comprenant la chambre de réception 112 est réalisée en aluminium, ce qui permet de diminuer les coûts de fabrication du vérin. Cette pièce de réception peut en outre alors être standard pour tout type de vérin.

On va maintenant décrire le déplacement de l'ensemble mobile de la position de dégagement (représentée à la figure 3) à la position de bridage (représentée à la figure 2). On notera que l'ensemble mobile est maintenu en position de dégagement par l'air comprimé envoyé contre une surface de butée 116 du piston 107. Cette position de l'ensemble 102 correspond à celle dans laquelle l'extrémité inférieure de la portion de déplacement 142 est en contact avec les rouleaux 150A-150D. Lorsque l'on souhaite passer de la position de dégagement à la position de bridage, on arrête la diffusion d'air comprimé. Le ressort 108 en compression tend alors à revenir à sa longueur à vide et a tendance à faire rentrer la tige dans le corps. Lorsque l'ensemble mobile se déplace de la position de dégagement à la position de bridage, il suit tout d'abord une trajectoire hélicoïdale (rotation et translation selon l'axe de déplacement du vérin) avec chaque rouleau qui roule contre un côté de la tige dans la fraction 143 de la portion de déplacement 142, de façon à modifier la position angulaire de la tige (d'un quart de tour) tout en modifiant la hauteur du bras 106, puis, une fois la position angulaire prescrite atteinte et le rouleau en contact avec la deuxième fraction 144 de la portion de déplacement 142, la tige prend une trajectoire linéaire verticale jusqu'à ce le bras 106 vienne en butée contre les éléments à pincer contre la face d'accueil 122 du support 120.

Le vérin de bridage selon l'invention n'est bien entendu pas limité au mode de réalisation décrit ici. Il pourrait par exemple être réalisé selon les variantes suivantes :
- la section du cylindre dans sa portion destinée à être en contact avec les rouleaux n'est pas forcément carrée. Elle pourrait être d'une autre section polygonale ou avec au moins un bord rectiligne, de préférence plusieurs bords rectilignes, pour obtenir le contact avec le ou les rouleaux correspondants. Le nombre et la disposition des rouleaux serait le cas échéant bien entendu adaptés en fonction de la section de la tige du vérin,
- la tige pourrait comprendre une section avec au moins un bord rectiligne sur toute sa dimension selon l'axe de déplacement et non seulement sur une portion de celle-ci,
- les rouleaux pourraient être montés, notamment articulés en rotation sur le corps du vérin, ce qui permettrait de limiter les frottements entre les rouleaux et le corps,
- le corps du vérin pourrait être réalisé en une seule pièce,
- la directrice de la section de guidage pourrait être différente de ce qui est décrit ici, par exemple hélicoïdale sur tout son trajet,
- les moyens permettant de maintenir les positions de bridage et de dégagement peuvent également être différentes de ce qui a été décrit ici. Le vérin pourrait même être dépourvu de moyens élastiques, l'action de la gravité permettant à elle seule de revenir dans la position de bridage. Le vérin peut également le cas échéant est pourvu d'un moteur qui commande le déplacement de l'ensemble mobile selon l'axe de déplacement.

## Revendications

1. Vérin de bridage (100) comprenant un corps (110) et un ensemble mobile (102) contenu dans une chambre de réception (112) du corps, mobile en rotation et en translation relativement au corps selon un axe de déplacement prédéterminé (V), le vérin comportant des moyens de guidage (142 ; 150) afin de guider l'ensemble mobile entre une position de bridage dans laquelle il présente une première hauteur (H1) et une première position angulaire selon l'axe de déplacement et une position de dégagement dans laquelle il présente une deuxième hauteur (H2) et une deuxième position angulaire selon ledit axe, lesdits moyens de guidage comprenant :
- au moins un rouleau cylindrique (150A-150D) disposé dans le corps du vérin de sorte que l'axe du rouleau soit essentiellement perpendiculaire à l'axe de déplacement (V),
- une tige (104) de l'ensemble mobile (102) s'étendant essentiellement selon l'axe de déplacement et étant conformée de façon à comprendre au moins une portion de déplacement (142) présentant une section prédéterminée selon un plan normal à l'axe de déplacement, la section comportant au moins un bord rectiligne, la portion de déplacement (142) étant conformée de sorte que ladite section suive une directrice essentiellement hélicoïdale autour de l'axe de déplacement sur au moins une fraction (143) de la portion, la tige (104) et le ou les rouleaux (150A-150D) étant positionnés de sorte que le ou chacun des rouleaux est en regard du ou d'au moins un des bords rectilignes,
**caractérisé en ce que** la portion de déplacement (142) de la tige (104) présente une section polygonale, et **en ce qu'**un rouleau (150A-150D) est agencé en regard de chacun des côtés de la section polygonale.

2. Vérin de bridage selon la revendication 1, **caractérisé en ce que** la portion de déplacement (142) de la tige (104) présente une section carrée et **en ce que** les moyens de guidage comprennent quatre rouleaux dont chacun est agencé en regard de l'un des côtés de la section carrée.

3. Vérin de bridage (100) selon la revendication 1 ou 2, **caractérisé en ce que** la section de la portion de déplacement (142) est symétrique relativement à l'axe de déplacement.

4. Vérin de bridage (100) selon l'une des revendications précédentes, **caractérisé en ce que** les rouleaux (150A-150D) reposent sur un épaulement (152) du corps (110), normal à l'axe de déplacement (V), entourant de préférence l'embouchure de la chambre de réception (112).

5. Vérin de bridage (100) selon la revendication précédente, **caractérisé en ce que** la translation des rouleaux (150A-150D) est empêchée au moins dans le plan normal à l'axe de déplacement, de préférence également selon l'axe de déplacement, du fait du contact du rouleau avec la tige (104), le corps (110) et/ou les rouleaux adjacents (150D-150C).

6. Vérin de bridage (100) selon les revendications 4 et 5, **caractérisé en ce que** l'épaulement (152) forme un rebord délimité par une ou plusieurs parois (154A-154D) s'étendant selon l'axe de déplacement (V) et ayant une section selon un plan normal à l'axe de déplacement (V) suivant celle de la portion de déplacement (142), les rouleaux étant en contact avec la tige dans la portion de déplacement (142) et la paroi (154) correspondante, afin de bloquer la translation du rouleau selon une direction radiale de la tige.

7. Vérin de bridage (100) selon la revendication précédente, **caractérisé en ce que** les rouleaux (150A-150D) sont en contact à chacune de leur extrémité longitudinale avec la ou l'une des parois (154B-154A) du corps délimitant l'épaulement (152) ou avec un rouleau adjacent (150D-150C), de préférence avec la ou l'une des parois (154B-154A) du corps à l'une de ses extrémités longitudinales et avec un rouleau adjacent (150D-150C) à l'autre de ses extrémités longitudinales, afin de bloquer la translation du rouleau selon sa direction longitudinale.

8. Vérin de bridage (100) selon l'une quelconque des revendications 4 à 7, **caractérisé en ce que** le corps comporte une cage à rouleaux rapportée à l'embouchure de la chambre de réception (112) et comprenant les rouleaux (150A-150D) et l'épaulement (152) et éventuellement les parois verticales (154A-154D).

9. Vérin de bridage (100) selon la revendication précédente, **caractérisé en ce que** la cage à rouleaux est réalisée en acier, de préférence traité pour que sa dureté soit supérieure à 50HRc, et une pièce du corps comprenant la chambre de réception est réalisée en un autre matériau, tel que l'aluminium.

10. Vérin de bridage (100) selon l'une quelconque des revendications précédentes, **caractérisé en ce que** les rouleaux (150A-150D) et la tige (104) sont réalisés en matériau métallique, notamment en acier, de préférence traité pour que sa dureté soit supérieure à 50 HRc.

11. Vérin de bridage (100) selon l'une quelconque des revendications précédentes, **caractérisé en ce que** la directrice de la portion de déplacement (142) de la tige est hélicoïdale autour de l'axe de déplacement (V) sur une fraction inférieure (143) de la portion de déplacement (142) et linéaire parallèle à l'axe de déplacement (V) sur une fraction supérieure (144) de la portion de déplacement (142).

12. Vérin de bridage (100) selon l'une quelconque des revendications précédentes, **caractérisé en ce que** l'ensemble mobile comprend un bras (106) s'étendant à l'extrémité supérieure de la tige (104) selon une direction essentiellement perpendiculaire à l'axe de déplacement (V).

13. Vérin de bridage (100) selon la revendication précédente, **caractérisé en ce que** le corps (110) est solidaire d'un support (120) comprenant une face d'accueil (122) essentiellement perpendiculaire de l'axe de déplacement (V), le vérin étant configuré de sorte que, dans la position de bridage, le bras (106) se trouve à la verticale de la face d'accueil (122) à une première hauteur (H1), et que, dans la position de dégagement, le bras se trouve à une hauteur (H2) supérieure , une extrémité libre du bras (106) se trouvant à distance de la face d'accueil (122) du support selon un plan normal à l'axe de déplacement (V).

14. Vérin de bridage (100) selon l'une quelconque des revendications précédentes, **caractérisé en ce qu'**il comprend une entrée de fluide (114) dans la chambre de réception (112), de sorte qu'un fluide entrant dans la chambre (112) par l'entrée de fluide (114) vienne en contact avec une face de butée (116) de l'ensemble mobile, afin de le pousser vers sa position de dégagement.

15. Vérin de bridage (100) selon l'une quelconque des revendications précédentes, **caractérisé en ce qu'**il comprend des moyens de rappel (108) de l'ensemble mobile dans sa position de bridage.

16. Vérin de bridage (100) selon la revendication précédente, **caractérisé en ce que** les moyens de rappel (108) sont constitués par un ressort situé dans la chambre de réception (112) et associé d'une part à l'ensemble mobile (102) et d'autre part au corps (110).

17. Procédé de bridage d'un empilement de couches (132, 134, 136), notamment de couches destinées à former un ensemble de stockage d'énergie, effectué à l'aide d'un vérin (100) selon l'une des revendications précédentes, **caractérisé en ce qu'**on effectue les étapes suivantes :
- on empile les couches (132-136) sur une face d'accueil (122) essentiellement normale à l'axe de déplacement du vérin (V) d'un support (120) solidaire du vérin, alors que l'ensemble mobile (102) du vérin est placée en position de dégagement, l'extrémité d'un bras (106) situé à une extrémité supérieure de la tige (104) étant à distance de la face d'accueil (120),
- on déplace l'ensemble mobile (102) de sorte que celui-ci prenne une position de bridage dans laquelle le bras (106) est placé à la verticale de la face d'accueil (120), en contact avec l'extrémité supérieure de l'empilement des couches.

## Patentansprüche

1. Klemmzylinder (100), umfassend einen Körper (110) und eine bewegbare Einheit (102), die in einer Aufnahmekammer (112) des Körpers enthalten ist, relativ zum Körper gemäß einer vorbestimmten Verlagerungsachse (V) rotierend und verschiebend bewegbar, wobei der Zylinder Führungsmittel (142; 150) aufweist, um die bewegbare Einheit zwischen einer Klemmposition, in welcher sie eine erste Höhe (H1) und eine erste Winkelposition gemäß der Verlagerungsachse aufweist, und einer Freigabeposition, in welcher sie eine zweite Höhe (H2) und eine zweite Winkelposition gemäß der Achse aufweist, zu führen, wobei die Führungsmittel umfassen:
- mindestens eine zylindrische Walze (150A-150D), die im Körper des Zylinders derart angeordnet ist, dass die Achse der Walze im Wesentlichen senkrecht zur Verlagerungsachse (V) ist,
- eine Stange (104) der bewegbaren Einheit (102), die sich im Wesentlichen gemäß der Verlagerungsachse erstreckt und derart ausgebildet ist, dass sie mindestens einen Verlagerungsabschnitt (142) umfasst, der einen gemäß einer Normalebene zur Verlagerungsachse vorbestimmten Querschnitt aufweist, wobei der Querschnitt mindestens einen geraden Rand aufweist, wobei der Verlagerungsabschnitt (142) derart ausgebildet ist, dass der Querschnitt einer im Wesentlichen um die Verlagerungsachse über mindestens einen Teil (143) des Abschnitts schraubenförmigen Direktrix folgt, wobei die Stange (104) und die Walze(n) (150A-150D) derart positioniert ist/sind, dass sich die oder jede der Walzen gegenüber dem oder mindestens einem der geraden Ränder befindet,
**dadurch gekennzeichnet, dass** der Verlagerungsabschnitt (142) der Stange (104) einen polygonalen Querschnitt aufweist und dass eine Walze (150A-150D) gegenüber jeder der Seiten des polygonalen Querschnitts ausgebildet ist.

2. Klemmzylinder nach Anspruch 1, **dadurch gekennzeichnet, dass** der Verlagerungsabschnitt (142) der Stange (104) einen quadratischen Querschnitt aufweist und dass die Führungsmittel vier Walzen umfassen, von denen jede gegenüber einer der Seiten des quadratischen Querschnitts ausgebildet ist.

3. Klemmzylinder (100) nach Anspruch 1 oder 2, **dadurch gekennzeichnet, dass** der Querschnitt des Verlagerungsabschnitts (142) relativ zur Verlagerungsachse symmetrisch ist.

4. Klemmzylinder (100) nach einem der vorangehenden Ansprüche, **dadurch gekennzeichnet, dass** die Walzen (150A-150D) auf einem zur Verlagerungsachse (V) normalen Absatz (152) des Körpers (110) ruhen, vorzugsweise die Mündung der Aufnahmekammer (112) umschließend.

5. Klemmzylinder (100) nach vorangehendem Anspruch, **dadurch gekennzeichnet, dass** die Verschiebung der Walzen (150A-150D) mindestens in der Normalebene zur Verlagerungsachse, vorzugsweise ebenfalls gemäß der Verlagerungsachse, aufgrund des Kontakts der Walze mit der Stange (104), dem Körper (110) und/oder den benachbarten Walzen (150D-150C) verhindert wird.

6. Klemmzylinder (100) nach den Ansprüchen 4 und 5, **dadurch gekennzeichnet, dass** der Absatz (152) eine von einer oder mehreren Wänden (154A-154D) begrenzte Kante bildet, die sich gemäß der Verlagerungsachse (V) erstreckt und einen Querschnitt gemäß einer Normalebene zur Verlagerungsachse (V) hat, welcher dem des Verlagerungsabschnitts (142) folgt, wobei die Walzen im Kontakt mit der Stange im Verlagerungsabschnitt (142) und der entsprechenden Wand (154) sind, um die Verschiebung der Walze gemäß einer radialen Richtung der Stange zu blockieren.

7. Klemmzylinder (100) nach vorangehendem Anspruch, **dadurch gekennzeichnet, dass** die Walzen (150A-150D) an jedem ihres Längsendes mit der oder einer der Wände (154B-154A) des Körpers, welcher den Absatz (152) begrenzt, oder mit einer benachbarten Walze (150D-150C), vorzugsweise mit der oder einer der Wände (154B-154A) des Körpers an einem ihrer Längsenden und mit einer benachbarten Walze (150D-150C) am anderen ihrer Längsenden im Kontakt sind, um die Verschiebung der Walze gemäß ihrer Längsrichtung zu blockieren.

8. Klemmzylinder (100) nach einem der Ansprüche 4 bis 7, **dadurch gekennzeichnet, dass** der Körper einen Walzenkäfig aufweist, welcher an der Mündung der Aufnahmekammer (112) angebracht ist und die Walzen (150A-150D) und den Absatz (152) und eventuell die vertikalen Wände (154A-154D) umfasst.

9. Klemmzylinder (100) nach vorangehendem Anspruch, **dadurch gekennzeichnet, dass** der Walzenkäfig aus Stahl, vorzugsweise behandeltem, damit seine Härte höher als 50 HRc ist, hergestellt ist, und ein Teil des Körpers, welches die Aufnahmekammer umfasst, aus einem anderen Material wie Aluminium hergestellt ist.

10. Klemmzylinder (100) nach einem der vorangehenden Ansprüche, **dadurch gekennzeichnet, dass** die Walzen (150A-150D) und die Stange (104) aus metallischem Material, insbesondere aus Stahl, vorzugsweise behandeltem, damit seine Härte höher als 50 HRc ist, hergestellt sind.

11. Klemmzylinder (100) nach einem der vorangehenden Ansprüche, **dadurch gekennzeichnet, dass** die Direktrix des Verlagerungsabschnitts (142) der Stange über einen unteren Teil (143) des Verlagerungsabschnitts (142) schraubenförmig um die Verlagerungsachse (V) und über einen oberen Teil (144) des Verlagerungsabschnitts (142) linear parallel zur Verlagerungsachse (V) ist.

12. Klemmzylinder (100) nach einem der vorangehenden Ansprüche, **dadurch gekennzeichnet, dass** die bewegbare Einheit einen Arm (106) umfasst, der sich am oberen Ende der Stange (104) gemäß einer zur Verlagerungsachse (V) im Wesentlichen senkrechten Richtung erstreckt.

13. Klemmzylinder (100) nach vorangehendem Anspruch, **dadurch gekennzeichnet, dass** der Körper (110) mit einer Unterlage (120) fest verbunden ist, die eine Empfangsfläche (122) umfasst, die im Wesentlichen senkrecht zur Verlagerungsachse (V) ist, wobei der Zylinder derart konfiguriert ist, dass sich in der Klemmposition der Arm (106) in der Vertikalen der Empfangsfläche (122) in einer ersten Höhe (H1) befindet und dass sich in der Freigabeposition der Arm in einer höheren Höhe (H2) befindet, wobei sich ein freies Ende des Arms (106) beabstandet von der Empfangsfläche (122) der Unterlage gemäß einer Normalebene zur Verlagerungsachse (V) befindet.

14. Klemmzylinder (100) nach einem der vorangehenden Ansprüche, **dadurch gekennzeichnet, dass** er einen Fluideingang (114) in die Aufnahmekammer (112) derart umfasst, dass ein durch den Fluideingang (114) in die Kammer (112) eintretendes Fluid mit einer Anschlagfläche (116) der bewegbaren Einheit in Kontakt kommt, um sie in ihre Freigabeposition zu drücken.

15. Klemmzylinder (100) nach einem der vorangehenden Ansprüche, **dadurch gekennzeichnet, dass** er Rückstellmittel (108) der bewegbaren Einheit in ihre Klemmposition umfasst.

16. Klemmzylinder (100) nach vorangehendem Anspruch, **dadurch gekennzeichnet, dass** die Rückstellmittel (108) von einer Feder gebildet sind, die sich in der Aufnahmekammer (112) befindet und zum einen der bewegbaren Einheit (102) und zum anderen dem Körper (110) zugeordnet ist.

17. Klemmverfahren eines Stapels von Schichten (132, 134, 136), insbesondere von Schichten, die bestimmt sind, eine Energiespeichereinheit zu bilden, durchgeführt mit Hilfe eines Zylinders (100) nach einem der vorangehenden Ansprüche, **dadurch gekennzeichnet, dass** die folgenden Schritte durchgeführt werden:
- Stapeln der Schichten (132-136) auf einer zur Verlagerungsachse des Zylinders (V) im Wesentlichen normalen Empfangsfläche (122) einer mit dem Zylinder fest verbundenen Unterlage (120), währenddessen die bewegbare Einheit (102) des Zylinders in Freigabeposition platziert ist, wobei das Ende eines Arms (106) an einem oberen Ende der Stange (104) von der Empfangsfläche (120) beabstandet ist,
- Verlagern der bewegbaren Einheit (102) derart, dass diese eine Klemmposition einnimmt, in welcher der Arm (106) vertikal zur Empfangsfläche (120) im Kontakt mit dem oberen Ende des Schichtenstapels platziert ist.

## Claims

1. A clamping cylinder (100) comprising a body (110) and a mobile assembly (102) contained in a receiving chamber (112) of the body, mobile in rotation and in translation relative to the body according to a predetermined axis of displacement (V), the cylinder comprising guide means (142; 150) for guiding the mobile assembly between a clamping position wherein it has a first height (H1) and a first angular position according to the axis of displacement and a release position wherein it has a second height (H2) and a second angular position according to said axis, said guide means comprising:
- at least one cylindrical roller (150A-150D) arranged in the body of the cylinder such that the axis of the roller is essentially perpendicular to the axis of displacement (V),
- a rod (104) of the mobile assembly (102) extending essentially according to the axis of displacement and being configured so as to comprise at least one portion of displacement (142) having a predetermined section according to a plane normal to the axis of displacement, the section comprising at least one rectilinear edge, the portion of displacement (142) being configured such that said section follows an essentially helicoidal guide about the axis of displacement on at least one fraction (143) of the portion, the rod (104) and the roller(s) (150A-150D) being positioned such that the or each of the rollers is facing the or at least one of the rectilinear edges,
**characterized in that** the portion of displacement (142) of the rod (104) has a polygonal section, and **in that** a roller (150A-150D) is arranged facing each of the sides of the polygonal section.

2. The clamping cylinder according to claim 1, **characterized in that** the portion of displacement (142) of the rod (104) has a square section and **in that** the guide means comprise four rollers each of which is arranged facing one of the sides of the square section.

3. The clamping cylinder (100) according to claim 1 or 2, **characterized in that** the section of the portion of displacement (142) is symmetrical relative to the axis of displacement.

4. The clamping cylinder (100) according to one of the preceding claims, **characterized in that** the rollers (150A-150D) rest on a shoulder (152) of the body (110), normal to the axis of displacement (V), preferably enclosing the mouthpiece of the receiving chamber (112).

5. The clamping cylinder (100) according to the preceding claim, **characterized in that** translation of the rollers (150A-150D) is prevented at least in the plane normal to the axis of displacement, preferably also according to the axis of displacement, due to contact of the roller with the rod (104), the body (110) and/or the adjacent rollers (150D-150C).

6. The clamping cylinder (100) according to claims 4 and 5, **characterized in that** the shoulder (152) forms a rim delimited by one or more walls (154A-154D) extending according to the axis of displacement (V) and having a section according to a plane normal to the axis of displacement (V) following that of the portion of displacement (142), the rollers being in contact with the rod in the portion of displacement (142) and the corresponding wall (154) so as to block translation of the roller according to a radial direction of the rod.

7. The clamping cylinder (100) according to the preceding claim, **characterized in that** the rollers (150A-150D) are in contact at each of their longitudinal ends with the or one of the walls (154B-154A) of the body delimiting the shoulder (152) or with an adjacent roller (150D-150C), preferably with the or one of the walls (154B-154A) of the body at one of its longitudinal ends and with an adjacent roller (150D-150C) at the other of its longitudinal ends so as to block translation of the roller according to its longitudinal direction.

8. The clamping cylinder (100) according to one of claims 4 to 7, **characterized in that** the body comprises a roller cage attached to the mouthpiece of the receiving chamber (112) and comprising the rollers (150A-150D) and the shoulder (152) and optionally the vertical walls (154A-154D).

9. The clamping cylinder (100) according to the preceding claim, **characterized in that** the roller cage is made of steel, preferably treated so that its hardness is greater than 50 HRc, and a piece of the body comprising the receiving chamber is made of another material such as aluminium.

10. The clamping cylinder (100) according to one of the preceding claims, **characterized in that** the rollers (150A-150D) and the rod (104) are made of metallic material, especially steel, preferably treated so that its hardness is greater than 50 HRc.

11. The clamping cylinder (100) according to one of the preceding claims, **characterized in that** the guide of the portion of displacement (142) of the rod is helicoidal about the axis of displacement (V) on a lower fraction (143) of the portion of displacement (142) and linear parallel to the axis of displacement (V) on an upper fraction (144) of the portion of displacement (142).

12. The clamping cylinder (100) according to one of the preceding claims, **characterized in that** the mobile assembly comprises an arm (106) extending to the upper end of the rod (104) according to a direction essentially perpendicular to the axis of displacement (V).

13. The clamping cylinder (100) according to the preceding claim, **characterized in that** the body (110) is integral with a support (120) comprising an essentially perpendicular supporting face (122) of the axis of displacement (V), the cylinder being configured such that, in the clamping position, the arm (106) is at the vertical of the supporting face (122) at a first height (H1) and that, in the release position, the arm is at a greater height (H2), a free end of the arm (106) being at a distance from the supporting face (122) of the support according to a plane normal to the axis of displacement (V).

14. The clamping cylinder (100) according to one of the preceding claims, **characterized in that** it comprises a fluid inlet (114) in the receiving chamber (112), such that fluid entering the chamber (112) via the fluid inlet (114) comes into contact with a stop face (116) of the mobile assembly so as to push it towards its release position.

15. The clamping cylinder (100) according to one of the preceding claims, **characterized in that** it comprises return means (108) of the mobile assembly in its clamping position.

16. The clamping cylinder (100) according to the preceding claim, **characterized in that** the return means (108) consist of a spring located in the receiving chamber (112) and connected on the one hand to the mobile assembly (102) and on the other hand to the body (110).

17. A method for clamping a stack of layers (132, 134, 136), especially layers intended to form an energy storage assembly, performed by means of a cylinder (100), according to one of the preceding claims, **characterized in that** the following steps are performed:
- the layers (132-136) are stacked on a supporting face (122) essentially normal to the axis of displacement of the cylinder (V) of a support (120) integral with the cylinder, while the mobile assembly (102) of the cylinder is placed in a release position, the end of an arm (106) located at an upper end of the rod (104) being at a distance from the supporting face (120),
- the mobile assembly (102) is shifted such that the latter assumes a clamping position wherein the arm (106) is placed at the vertical of the supporting face (120), in contact with the upper end of the stack of layers.
